# EUROPÄISCHE PATENTSCHRIFT

(11) **EP 3 973 840 B1**
(45) Veröffentlichungstag und Bekanntmachung des Hinweises auf die Patenterteilung: **12.02.2025**
(21) Anmeldenummer: 21191215.9
(22) Anmeldetag: 13.08.2021
(51) Int. Cl.: A47L 9/28, A47L 11/40, A47L 13/00, A47L 1/00, G06F 3/04847, G06Q 10/06, G06Q 90/00, G06Q 50/10, G06Q 10/0631

(54) **VERFAHREN ZUM BEARBEITEN VON REINIGUNGSTÄTIGKEITEN**
METHOD FOR PROCESSING CLEANING ACTIVITIES
PROCÉDÉ DE TRAITEMENT DES ACTIVITÉS DE NETTOYAGE

(30) Priorität: 23.09.2020 DE 102020211927
(43) Veröffentlichungstag der Anmeldung: 30.03.2022
(73) Patentinhaber: BSH Hausgeräte GmbH, 81739 München (DE)
(72) Erfinder: Fremerey, Maximilian, 97633 Saal an der Saale (DE)

(56) Entgegenhaltungen:
- EP-A1- 3 708 058
- WO-A1-2016/066209
- DE-A1- 102017 116 747
- DE-U1- 202018 104 966

## Beschreibung

Die Erfindung betrifft ein Verfahren zur Bearbeitung von Reinigungstätigkeiten mit zur Verfügung stehenden Reinigungshilfsmitteln, wie beispielsweise Reinigungsmittel, Reinigungsgeräte, Gerätezubehör und ähnliches, sowie einen Reinigungskonfigurator, der für ein derartiges Verfahren vorgesehen beziehungsweise geeignet ist.

Innerhalb eines Haushaltes fallen regelmäßig unterschiedliche Reinigungstätigkeiten an, wie beispielsweise Staubsaugen, Staubwischen, Bodenwischen, Fensterputzen und/oder Wischen von Oberflächen. Für jede einzelne dieser Reinigungstätigkeiten stehen dem Benutzer eine Mehrzahl von Reinigungshilfsmitteln zur Verfügung, welche die Durchführung der Reinigungstätigkeiten ermöglichen, erleichtern beziehungsweise optimieren und/oder verbessern.

Beispiele von Reinigungshilfsmitteln sowie den hierzu jeweilig möglichen und durchführbaren Reinigungstätigkeiten sind wie folgt aufgelistet:

| | |
|---|---|
| Mikrofasertuch: | Trockene Reinigungsvorgänge wie zum Beispiel Staubwischen, nasse Reinigungsvorgänge wie zum Beispiel Abwischen von Oberflächen, Pflegetätigkeiten von Oberflächen |
| Düsen für elektrische Reinigungsgeräte: | Trockene Reinigungsvorgänge (zum Beispiel Polsterdüse, Ritzendüse, Matratzendüse), nasse Reinigungsvorgänge (zum Beispiel Aufsatzdüse mit rotierendem Aufsatz) |
| Reiniger (chemisch): | zum Beispiel Polsterreiniger, Teppichreiniger, Allzweckreiniger für Böden, Fensterreiniger, Badreiniger, Küchen(geräte)reiniger |
| Pflegemittel: | zum Beispiel Parkettpflege, Teppichpflege |

Aufgrund der Vielfalt an verwendbaren und zur Verfügung stehenden Reinigungshilfsmitteln ist es für den Benutzer schwer einzuschätzen beziehungsweise zu entscheiden, mit welchen des im Haushalt vorhandenen Equipments beziehungsweise Reinigungshilfsmitteln eine anstehende Reinigungstätigkeit am besten und erfolgversprechendsten beziehungsweise am effizientesten erledigt werden kann.

Im Bereich Kochen ist es beispielsweise bekannt, dem Benutzer mittels einer App auf einem Smartphone Vorschläge zu unterbreiten, welche Gerichte der Benutzer unter Angabe seiner im Haushalt befindlichen Lebensmittel zubereiten kann, wobei gleichzeitig auch Bewertungen anderer Konsumenten anzeigbar sind, ob und wie gut diese möglichen Gerichte schmecken und mit welchen Aufwänden bei der Zubereitung zu rechnen ist.

Aus der Druckschrift WO 2016/066209 A1 ist beispielsweise ein System bekannt, das mindestens eine Austragseinheit zum Austragen von Reinigungsflüssigkeit, eine Eingabeeinheit zum Eingeben eines Förderparameters durch einen Benutzer und eine Ausgabeeinheit zum Ausgeben einer Empfehlung der Austragseinheit abhängig vom eingegebenen Förderparameter umfasst.

Aufgabe der Erfindung ist es, ein benutzerangepasstes und/oder optimiertes Verfahren zur Bearbeitung von Reinigungstätigkeiten mit zur Verfügung stehenden Reinigungshilfsmitteln bereitzustellen, wobei das Verfahren insbesondere Vorschläge bezüglich Benutzung des bestmöglichsten, im Haushalt zur Verfügung stehenden Reinigungshilfsmittel für die jeweilige anstehende Reinigungstätigkeit zur Verfügung stellt.

Diese Aufgabe wird durch ein Verfahren zur Bearbeitung von Reinigungstätigkeiten mit zur Verfügung stehenden Reinigungshilfsmitteln mit den Merkmalen des Anspruchs 1 sowie durch einen Reinigungskonfigurator mit den Merkmalen des Anspruchs 9 gelöst. Vorteilhafte Ausgestaltungen und Weiterbildungen sind Gegenstand der Unteransprüche.

Erfindungsgemäß weist ein Verfahren zur Bearbeitung von Reinigungstätigkeiten mit zur Verfügung stehenden Reinigungshilfsmitteln folgende Verfahrensschritte auf:
- Festlegen der durchzuführenden Reinigungstätigkeiten durch den Benutzer an einem tragbaren Zusatzgerät,
- Bestimmen und Festlegen zumindest eines, bevorzugt aller, zur Verfügung stehenden Reinigungshilfsmittel(s) durch den Benutzer mit dem tragbaren Zusatzgerät,
- Verknüpfen des zur Verfügung stehenden Reinigungshilfsmittels mit den durchzuführenden Reinigungstätigkeiten, und
- Darstellen von Vorschlägen an dem tragbaren Zusatzgerät bezüglich des zur Verfügung stehenden Reinigungshilfsmittels zum Erledigen zumindest einer der durchzuführenden Reinigungstätigkeiten unter Einbeziehen von Produktinformationen des zur Verfügung stehenden Reinigungshilfsmittels, der Gebrauchstauglichkeit des zur Verfügung stehenden Reinigungshilfsmittels und/oder während der Reinigung anfallende Prozessdaten, wobei das Bestimmen des zur Verfügung stehenden Reinigungshilfsmittels durch Scannen eines Produktbarcodes, durch Eingeben der Produktnummer oder durch Auswahl aus einem Menü erfolgt.

Die erfindungsgemäße Lösung zeichnet sich insbesondere durch einen Reinigungskonfigurator aus, welcher insbesondere virtuell dem Benutzer Vorschläge unterbreitet, welche Reinigungstätigkeit mit welchem im Haushalt zur Verfügung stehenden Reinigungshilfsmittel bevorzugt zu erledigen ist. Hierzu werden bevorzugt jegliche beziehungsweise alle dem Haushalt zur Verfügung stehenden Reinigungshilfsmittel mit dem tragbaren Zusatzgerät registriert. Gleichzeitig werden Reinigungshilfsmittel anhand mehrerer unterschiedlicher Eigenschaften hinsichtlich ihrer Einsatztauglichkeit bewertet. Diese Bewertung ermöglicht dem Benutzer eine hinreichend genaue Einschätzung, ob das vorgeschlagene Reinigungshilfsmittel seinen Bedürfnissen und seinem Bedarf entspricht.

Insbesondere wird dem Benutzer bei der Vielfalt an verwendbaren Reinigungshilfsmitteln eine auf seine Bedürfnisse angepasste Empfehlung an geeigneten Reinigungshilfsmitteln angegeben, welche dem Benutzer in Abhängigkeit der jeweiligen durchzuführenden Reinigungstätigkeit anhand seines vorhandenen Reinigungsequipments Vorschläge darstellt, mit welchem des im Haushalt vorhandenen Reinigungshilfsmittel die anstehende Reinigungstätigkeit am besten erledigt werden kann. Für diese Vorschläge können neben den Produktinformationen der Reinigungshilfsmittel die Gebrauchstauglichkeit beispielsweise aus Sicht anderer Benutzer sowie Prozessdaten, welche während der Reinigungstätigkeit anfallen, einbezogen werden.

Das erfindungsgemäße Verfahren ermöglicht also den Vergleich von Reinigungshilfsmitteln bezüglich ihrer Eignung für eine anstehende Reinigungstätigkeit anhand von Attributen. Die Attribute können sich hierbei aus den Herstellerangaben zusammensetzen, sowie aus den individuellen Bewertungen der Benutzer und/oder neutralen Instanzen wie beispielsweise Testinstitute. Insbesondere wird auf Anforderung des Benutzers für eine bestimmte Reinigungstätigkeit wie zum Beispiel Fensterputzen, oder Bodenwischen ein "Rezept" von zu verwendeten Reinigungshilfsmitteln zusammengestellt. Hierbei gehen unter anderem Informationen vom Hersteller der Reinigungshilfsmittel wie zum Beispiel der Anwendungsbereich und/oder Benutzerbewertungen ein.

Ausgeführt wird das erfindungsgemäße Verfahren bevorzugt in einer App, beispielsweise innerhalb der sogenannten BSH-HomeConnect App. Diese App ist den Fachleuten bekannt und wird daher an dieser Stelle nicht näher erläutert.

Unter Reinigungstätigkeiten sind jegliche Reinigungsvorgänge zu verstehen, die in einem Haushalt anfallen können. Hierzu zählen sowohl trockene als auch nasse Reinigungsvorgänge wie beispielsweise Staubwischen, nasses Abwischen von Oberflächen, Pflegetätigkeiten von Oberflächen, Bodenwischen, Staubsaugen, Nasssaugen, Parkettpflege, Teppichpflege, Polsterpflege, Matratzenpflege, Fensterputzen, Badreinigen und/oder Küchen(geräte) reinigen.

Unter einem Reinigungshilfsmittel ist insbesondere jegliches Hilfsmittel zu verstehen, das bei einer Reinigungstätigkeit im Haushalt Verwendung finden kann. Hierzu zählen beispielsweise Bodenbearbeitungsgeräte, wie Staubsauger, Staubsaugerroboter, Nasssauger, sowie deren Zubehör, wie beispielsweise Düsen für elektrische Reinigungsgeräte, sowie Besen, Wischmop, Tücher, wie Mikrofasertücher, Staubtücher, Wischlappen, sowie jegliche Reinigungsmittel wie chemische Reiniger, Pflegemittel, Poliermittel.

Unter einem Zusatzgerät ist vorliegend insbesondere jegliches Gerät zu verstehen, das für einen Benutzer tragbar ist, das außerhalb des Reinigungshilfsmittels angeordnet, insbesondere differenziert vom Reinigungshilfsmittel ist, und zu einer Anzeige, Bereitstellung, Übermittlung und/oder Übertragung von Daten geeignet ist, wie beispielsweise ein Handy, ein Smartphone, ein Tablet und/oder ein Computer beziehungsweise Laptop. Das Zusatzgerät weist insbesondere eine Bedieneinheit für den Benutzer auf. Unter einer Bedieneinheit ist insbesondere jegliche Einheit zu verstehen, die zu einer Bedienung des Zusatzgeräts geeignet ist, wie beispielsweise ein tatsächliches oder virtuelles Tastenfeld, ein Touchpad und/oder ein zugehöriger Bildschirm beziehungsweise Display.

Unter Produktinformationen sind jegliche Informationen zu verstehen, die dem jeweiligen Reinigungshilfsmittel zuordenbar ist, wie beispielsweise Inhaltsstoffe, Anwendungsbereiche, eingebaute Komponenten, Eigenschaften bezüglich giftige Substanzen und ähnliches.

Unter einer Gebrauchstauglichkeit ist die Tauglichkeit des Reinigungshilfsmittels für bestimmte Reinigungstätigkeiten im Gebrauch zu verstehen. Hierzu können insbesondere die Sicht anderer Benutzer und/oder die eigene Benutzersicht mit einfließen.

Unter Prozessdaten sind jegliche Daten der Reinigungshilfsmittel zu verstehen, die während der Reinigungstätigkeit anfallen (können), wie beispielsweise Updates, Wartung und/oder Pflege von Geräten, Gerätekomponenten und/oder Inventar.

Erfindungsgemäß erfolgt das Bestimmen des zur Verfügung stehenden Reinigungshilfsmittels durch Scannen eines Produktbarcodes, durch Eingeben der Produktnummer oder durch Auswahl aus einem Menü. Zu Beginn des Verfahrens wird vom Benutzer also zunächst angegeben, über welche Reinigungshilfsmittel sein Haushalt verfügt. Dabei werden alle zur Verfügung stehenden Reinigungshilfsmittel an dem Zusatzgerät, beispielsweise in einer App, zum Beispiel der BSH-HomeConnect App, registriert. Das Registrieren kann durch Scannen des Produktbarcodes des jeweiligen Reinigungshilfsmittels, durch Eingeben der jeweiligen Produktnummer des Reinigungshilfsmittels oder durch Auswahl des Reinigungshilfsmittels aus beispielsweise einem Drop-Down Menü erfolgen. Hierbei kann die Art des Registrierens auch von Reinigungshilfsmittel zu Reinigungshilfsmittel variieren.

Bei einer weiteren vorteilhaften Ausführungsform erfolgt das Verknüpfen des zur Verfügung stehenden Reinigungshilfsmittels mit den durchzuführenden Reinigungstätigkeiten mittels einer Lookup Tabelle. Nach Bestimmen der zur Verfügung stehenden Reinigungshilfsmittel beispielsweise in der App erfolgt also in einem nächsten Schritt das Verknüpfen, vorzugsweise ebenfalls in der App, über eine Lookup Tabelle. Hierbei werden einem jeden zur Verfügung stehenden Reinigungshilfsmittel eine oder mehrere mögliche Reinigungstätigkeiten entlang einer sogenannten Cleaning-Jobs-to-be-done Journey zugeordnet, wie beispielsweise Trockenreinigung, Nassreinigung, Pflege und Wartung von Reinigungsgeräten beziehungsweise dessen Inventar. Die Verknüpfung kann hierbei durch den Benutzer und/oder durch maschinelle Intelligenz erfolgen.

Die dem Reinigungshilfsmittel zugeordneten Reinigungstätigkeiten können beispielsweise von dem Betreiber des Reinigungskonfigurators, also beispielsweise der App, zur Verfügung gestellt werden. Alternativ oder zusätzlich können die dem Reinigungshilfsmittel zugeordneten Reinigungstätigkeiten von den Herstellern der Reinigungshilfsmittel in dem Reinigungskonfigurator hochgeladen werden, beispielsweise unter Nutzung eines entsprechenden Interfaces. Hierbei können bevorzugt jegliche Informationen, die das jeweiligen Reinigungshilfsmittel betreffen, in dem Reinigungskonfigurator eingespeist werden.

Bei einer weiteren vorteilhaften Ausführungsform werden beim Darstellen von Vorschlägen länderspezifische Besonderheiten einbezogen. Insbesondere lassen sich infolge des Einspeisens jeglicher Informationen des jeweiligen Reinigungshilfsmittels auch länderspezifische Besonderheiten bezüglich dieser Reinigungshilfsmittel abbilden. Beispielsweise finden im arabischen Raum chemische Reinigungshilfsmittel bevorzugt Verwendung im Vergleich zu anderen Teilen der Welt.

Neben den Grundinformationen des jeweiligen Reinigungshilfsmittels können die Reinigungshilfsmittel zudem mit weiteren Attributen, vorzugsweise in der App, versehen werden, wie beispielsweise die Gebrauchstauglichkeit des Reinigungshilfsmittels während der Reinigungstätigkeit beziehungsweise des Reinigungseinsatzes.

Bei einer weiteren vorteilhaften Ausführungsform werden beim Darstellen von Vorschlägen Nachhaltigkeit und/oder Umweltfreundlichkeit des zur Verfügung stehenden Reinigungshilfsmittels einbezogen. Einige Attribute beziehungsweise Informationen zum Reinigungshilfsmittel, wie beispielsweise die Nachhaltigkeit und/oder Umweltfreundlichkeit, speisen sich vorteilhaft aus Informationen Dritter. Diese Attribute beziehungsweise Informationen werden beispielsweise abgeleitet aus den Angaben von Testinstituten und/oder neutralen dritten Instanzen. Diese Attribute beziehungsweise Informationen werden insbesondere beim Darstellen von Vorschlägen mit einbezogen und beispielsweise in der App angezeigt.

Bei einer weiteren vorteilhaften Ausführungsform werden beim Darstellen von Vorschlägen benutzerabhängige Informationen mit einbezogen. Vorzugsweise gibt der Benutzer nach dem Erledigen der zumindest einen durchzuführenden Reinigungstätigkeit für das zur Verfügung stehende Reinigungshilfsmittel eine Bewertung an dem tragbaren Zusatzgerät ab. Beispielsweise bewertet der Benutzer nach getaner Reinigungstätigkeit das Reinigungshilfsmittel anhand vorgegebener und/oder eigener Kriterien. Diese benutzerabhängige Bewertung wird vorzugsweise anderen Benutzern der App ebenfalls angezeigt. Derartige Bewertungssysteme sind beispielsweise bekannt aus Kaufportalen im Internet, wo beispielsweise Sternebewertungen nach Kaufabwicklung abgegeben werden können, die anderen Benutzern angezeigt werden.

Durch dieses Bewertungssystem wird mit Vorteil die Interaktion des Benutzers mit dem Reinigungskonfigurator erhöht. Zudem erhalten so mit Vorteile die Reinigungshilfsmittel neben den Herstellerinformationen reale Benutzermeinungen bezogen auf die Eignung des jeweiligen Reinigungshilfsmittels für die vorgeschlagene Reinigungstätigkeit.

Bei einer weiteren vorteilhaften Ausführungsform umfasst das Verfahren den weiteren Verfahrensschritt, dass dem Benutzer an dem Zusatzgerät, insbesondere in der App beziehungsweise dem Reinigungskonfigurator, Vorschläge von weiteren, nicht zur Verfügung stehenden Reinigungshilfsmitteln zum verbesserten Durchführen der durchzuführenden Reinigungstätigkeiten dargestellt werden. In einem weiteren Verfahrensschritt stellt der Reinigungskonfigurator also dem Benutzer Vorschläge dar, mit welchen, noch nicht im Haushalt des Benutzers vorhandenen Reinigungshilfsmitteln gewisse Reinigungstätigkeiten erleichtert durchgeführt werden können. Diese Vorschläge erfolgen beispielsweise auf Basis der Angaben des Benutzers zu seinem Reinigungsverhalten und/oder durch Rückschlüsse maschineller Algorithmen, zum Beispiel neuronaler Netze, auf das Reinigungsverhalten des Benutzers.

Bei einer weiteren vorteilhaften Ausführungsform umfasst das Verfahren den weiteren Verfahrensschritt, dass zum Einbeziehen von Produktinformationen des zur Verfügung stehenden Reinigungshilfsmittels relevante Werte von dem Reinigungshilfsmittel an das tragbare Zusatzgerät übermittelt werden. Hierdurch kann die manuelle Interaktion des Benutzers hinsichtlich Bewertung der jeweiligen Reinigungshilfsmittel-Attribute reduziert werden. Insbesondere ist vorgesehen, dass alle loT-fähigen Reinigungsgeräte auswählbare Daten direkt an den Reinigungskonfigurator senden können. Derartige Daten sind bevorzugt solche, welche unabhängig vom Empfinden durch den Benutzer sind, wie beispielsweise Zeitdauer, in der ein Reinigungshilfsmittel aktiv eingesetzt wird, der Energiebedarf oder die Reinigungsleistung während der aktiven Zeit des Einsatzes des Reinigungshilfsmittels, wie beispielsweise aufgenommene Schmutzmenge über die Reinigungszeit.

Das Übermitteln und Senden der Daten kann bevorzugt nur nach ausdrücklicher Zustimmung durch den Benutzer erfolgen. Vorzugsweise erfolgt das Übermitteln dabei in anonymisierter Form, soweit vorgesehen ist, dass diese Daten an Dritte beziehungsweise andere Benutzer weitergegeben werden. Auch ist es möglich, dass der Benutzer manuell bestimmt, welche Daten weitergeleitet beziehungsweise übermittelt werden sollen.

Daten und/oder Attribute, welche stark durch das subjektive Empfinden des Benutzers geprägt sind, wie beispielsweise die Handhabung, können und sollen weiterhin manuell bewertet und eingegeben werden.

Erfindungsgemäß ist weiter ein Reinigungskonfigurator angegeben, der für ein Verfahren nach einem der vorhergehenden Ansprüche vorgesehen beziehungsweise geeignet ist. Insbesondere stellt der erfindungsgemäße Reinigungskonfigurator nach Festlegen der durchzuführenden Reinigungstätigkeiten durch den Benutzer an einem tragbaren Zusatzgerät, nach Bestimmen und Festlegen zumindest eines zur Verfügung stehenden Reinigungshilfsmittels durch den Benutzer mit dem tragbaren Zusatzgerät und nach Verknüpfen des zur Verfügung stehenden Reinigungshilfsmittels mit den durchzuführenden Reinigungstätigkeiten Vorschläge bezüglich des zur Verfügung stehenden Reinigungshilfsmittels zum Erledigen zumindest einer der durchzuführenden Reinigungstätigkeiten dar, wobei hierbei Produktinformationen des zur Verfügung stehenden Reinigungshilfsmittels, die Gebrauchstauglichkeit des zur Verfügung stehenden Reinigungshilfsmittels und/oder während der Reinigung anfallende Prozessdaten einbezogen sind, und wobei das Bestimmen des zur Verfügung stehenden Reinigungshilfsmittels durch Scannen eines Produktbarcodes, durch Eingeben der Produktnummer oder durch Auswahl aus einem Menü erfolgt.

Der erfindungsgemäße Reinigungskonfigurator erteilt also dem Benutzer in Abhängigkeit der zu erledigende Reinigungstätigkeit Vorschläge, welches dem Benutzer zur Verfügung stehenden Reinigungshilfsmittel für die jeweilige Reinigungstätigkeit am besten geeignet ist. Ausgeführt wird der Reinigungskonfigurator bevorzugt in einer App, beispielsweise innerhalb der BSH-HomeConnect App. Gleichzeitig sind die Reinigungshilfsmittel anhand mehrerer Eigenschaften hinsichtlich ihrer Einsatztauglichkeit bewertet. Diese Bewertung ermöglicht dem Benutzer eine hinreichend genaue Einschätzung, ob das vorgeschlagene Reinigungshilfsmittel seinen Bedürfnissen entspricht.

Unter einem Reinigungskonfigurator ist jeglicher Konfigurator zu verstehen, der es ermöglicht, auf elektronischem Weg Reinigungshilfsmittel geeignete Reinigungstätigkeiten zuzuordnen. Dies erfolgt nach Festlegen der zur Verfügung stehenden Reinigungsmittel und nach Festlegen der durchzuführenden Reinigungstätigkeiten bevorzugt automatisch im Reinigungskonfigurator, in dem anschließend Vorschläge von zur Verfügung stehenden, geeigneten Reinigungsmitteln zur Bearbeitung bestimmter durchzuführenden Reinigungstätigkeiten angezeigt sind.

Jegliche Merkmale, Ausgestaltungen, Ausführungsformen und Vorteile das Verfahren betreffend finden auch in Zusammenhang mit dem erfindungsgemäßen Reinigungskonfigurator Anwendung, und umgekehrt.

Die Erfindung wird anhand der nachfolgenden, lediglich Beispiele darstellenden Figuren näher erläutert. Es zeigen:
- Figur 1:: ein schematisches Flussdiagramm eines Ausführungsbeispiels eines erfindungsgemäßen Verfahrens zur Bearbeitung von Reinigungstätigkeiten mit zur Verfügung stehenden Reinigungshilfsmitteln, und
- Figur 2:: ein weiteres schematisches Flussdiagramm eines Ausführungsbeispiels eines erfindungsgemäßen Verfahrens zur Bearbeitung von Reinigungstätigkeiten mit zur Verfügung stehenden Reinigungshilfsmitteln.

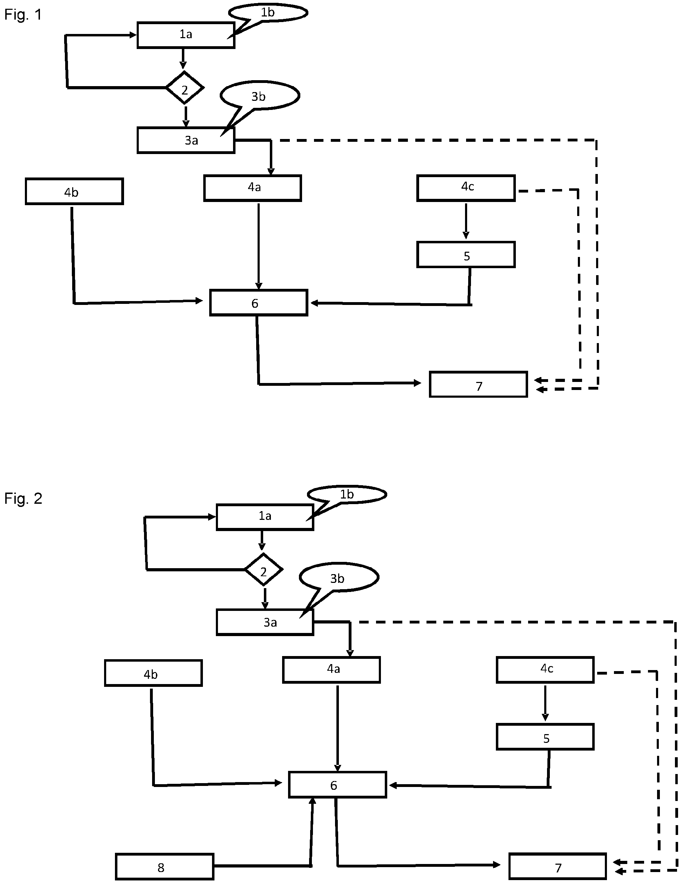

In Figur 1 ist schematisch ein Flussdiagramm dargestellt, in dem das erfindungsgemäße Verfahren zur Bearbeitung von Reinigungstätigkeiten mit zur Verfügung stehenden Reinigungshilfsmitteln als Prinzipskizze gezeigt ist. Das Verfahren erteilt dem Benutzer in Abhängigkeit der zu erledigenden Reinigungstätigkeit Vorschläge, welches dem Benutzer zur Verfügung stehenden Reinigungshilfsmittel für die jeweilige Reinigungstätigkeit am besten geeignet ist. Ausgeführt wird das Verfahren bevorzugt in einer App, beispielsweise innerhalb der HomeConnect App der BSH, und/oder über einen Reinigungskonfigurator.

Hierzu gibt der Benutzer in einem ersten Schritt 1a initial in der App an, welche Reinigungstätigkeiten in seinem Haushalt anstehen und über welche Reinigungshilfsmittel sein Haushalt verfügt. Als Reinigungshilfsmittel gelten hierbei jegliche Reinigungsmittel und (elektrische) Reinigungsgeräte wie beispielsweise Staubsauger, Tücher, Reiniger, Pflegemittel und vieles mehr. Das Hinzufügen der Reinigungshilfsmittel kann durch Scannen des Produktbarcodes des jeweiligen Reinigungshilfsmittels, durch Eingeben der jeweiligen Reinigungshilfsmittel-Produktnummer oder durch Auswahl des Reinigungshilfsmittels aus einem Drop-Down Menü erfolgen (Schritt 1b).

Hat der Benutzer die vorhandenen Reinigungshilfsmittel hinzugefügt, folgt dem Verfahren der Schritt 3a. Sind keine vorhandenen Reinigungshilfsmittel hinzugefügt worden, wird über Schritt 2 wieder auf Schritt 1a zurückgeführt, um den Benutzer aufzufordern, vorhandene Reinigungshilfsmittel (wie bereits oben beschrieben) anzugeben.

Im Schritt 3a erfolgt eine Verknüpfung der im Haushalt vorhandenen Reinigungshilfsmittel mit der oder den durch sie durchzuführenden Reinigungstätigkeiten. Insbesondere findet also eine Verknüpfung des Reinigungshilfsmittels mit Basisinformationen hinsichtlich ihres Einsatzes statt. Die Basisinformationen zu einem Reinigungshilfsmittel und dessen Eignung bezüglich ihres Einsatzes werden beispielsweise über die jeweiligen Hersteller zur Verfügung gestellt (Schritt 3b). Hierzu lädt der Hersteller des Reinigungshilfsmittels die Informationen, die ihre Produkte betreffen, selbständig in den Reinigungskonfigurator hoch, beispielsweise unter Nutzung eines entsprechenden Interfaces. Zusätzlich oder alternativ kann der Betreiber des Reinigungskonfigurators die dem Reinigungshilfsmittel zugeordneten Reinigungstätigkeiten zur Verfügung stellen.

Beispielsweise erfolgt die Verknüpfung über eine sogenannte Lookup Tabelle. Das bedeutet, dass jedem Reinigungshilfsmittel eine oder mehrere Reinigungsfunktionen entlang einer sogenannten Cleaning-Jobs-to-be-done Journey zugeordnet wird, wie beispielsweise Trockenreinigung, Nassreinigung sowie Pflege und Wartung von Reinigungsgeräten und Inventar. Im Schritt 4a erfolgt also eine Zuordnung des Reinigungshilfsmittels für eine gewisse Reinigungstätigkeit und Ablage der Basisinformation in der Lookup Tabelle.

Neben diesen Basisinformationen können die Reinigungshilfsmittel zudem mit weiteren Attributen versehen werden (Schritt 4b). Beispielsweise lassen sich länderspezifische Besonderheiten bezüglich der jeweiligen Reinigungshilfsmittel abbilden. Beispielsweise finden im arabischen Raum häufiger chemische Reinigungsmittel Anwendung als in anderen Teilen der Welt. Alternativ oder zusätzlich kann im Schritt 4b die Gebrauchstauglichkeit während des Reinigungseinsatzes oder die Nachhaltigkeit und/oder Umweltfreundlichkeit des jeweiligen Reinigungshilfsmittels eingespeist werden. Einige dieser Attribute zu den Reinigungshilfsmitteln, wie zum Beispiel die Nachhaltigkeit, basieren vorzugsweise auf Informationen Dritter. Beispielsweise sind diese Attribute abgeleitet aus Angaben von Testinstituten und/oder neutralen dritten Instanzen.

Zudem ist im Schritt 4c angedacht, dass der Benutzer das jeweilige Reinigungshilfsmittel nach getaner Reinigungstätigkeit anhand gewisser Kriterien wie beispielsweise die Gebrauchstauglichkeit bewertet und diese Bewertung anderen Nutzern angezeigt wird. Hier findet also ein Bewertungssystem statt, bei dem die Interaktion des Benutzers mit dem Reinigungskonfigurator erhöht wird. Zudem erhalten so die Reinigungshilfsmittel neben den Herstellerangaben reale Konsumentenmeinungen, bezogen auf die Eignung des Reinigungshilfsmittels für eine dezidierte Reinigungstätigkeit.

Insbesondere findet in Schritt 4c die Bewertung der Gebrauchstauglichkeit des Reinigungshilfsmittels durch den individuellen Konsumenten auf Grundlage der Produkteigenschaften statt. In Schritt 5 erfolgt eine Zusammenfassung aller Konsumentenrückmeldungen zu Produkteigenschaften in einer kumulierten Bewertung.

In Schritt 6 werden die in den Schritten 4a, 4b, 4c und 5 gesammelten beziehungsweise die zusammengestellten Produktinformationen zusammengefügt. Es erfolgt eine tagesaktuelle Bewertung eines Reinigungshilfsmittels anhand der Basisinformationen, der Bewertung durch den Benutzer und der weiteren Kriterien wie beispielsweise Nachhaltigkeit, länderspezifische Reinigungsgewohnheiten und ähnliches.

In einem letzten Schritt 7 stellt der Reinigungskonfigurator dem Benutzer Vorschläge dar, mit welchen, noch nicht im Haushalt des Benutzers vorhandenen Reinigungshilfsmitteln gewisse Reinigungstätigkeiten erleichtert durchgeführt werden können. Es erfolgen also Kaufvorschläge an den individuellen Benutzer für Reinigungshilfsmittel, welche das vorhandene Equipment (gut) ergänzen würden. Diese Vorschläge erfolgen auf Basis der Angaben des Benutzers zu seinem Reinigungsverhalten und/oder durch Rückschlüsse maschineller Algorithmen wie beispielsweise neuronale Netze auf das Reinigungsverhalten des Benutzers. Hier fließen also insbesondere die Informationen aus Schritt 3a, Schritt 4c und Schritt 6 ein.

Figur 2 zeigt schematisch ein Flussdiagramm, in dem das erfindungsgemäße Verfahren zur Bearbeitung von Reinigungstätigkeiten mit zur Verfügung stehenden Reinigungshilfsmitteln als Prinzipskizze gezeigt ist. Hierbei wird das in Figur 1 dargestellte Verfahren um einen weiteren Schritt 8 ergänzt. Das restliche Verfahren der Figur 2 (also die Schritte 1 bis 7) entsprechen hierbei den Schritten 1 bis 7 der Figur 1.

Um die manuelle Interaktion des Benutzers hinsichtlich der Bewertung der jeweiligen Attribute zu reduzieren, können in dem zusätzlichen Schritt 8 alle loT fähigen, elektrischen Reinigungsgeräte auswählbare Daten und Informationen direkt an den Renigungskonfigurator senden. Diese Daten beziehungsweise Informationen werden bevorzugt durch Sensoren des jeweiligen Reinigungsgeräts erfasst. Derartige Daten und Informationen sind bevorzugt solche, welche unabhängig vom subjektiven Empfinden des Benutzers sind, wie beispielsweise die Zeitdauer, in der das Reinigungshilfsmittel aktiv eingesetzt worden ist, der Energiebedarf, die Reinigungsleistung während der aktiven Zeit des Einsatzes des Reinigungshilfsmittels, Wartungsintervalle, und/oder die aufgenommene Schmutzmenge über die Zeitdauer.

Attribute, welche durch das subjektive Empfinden des Benutzers geprägt sind, wie beispielsweise die Handhabung, können zusätzlich weiterhin manuell bewertet werden (Schritt 4c).

Bevorzugt erfolgt das Senden der Daten nur nach einer ausdrücklichen Zustimmung des Benutzers. Besonders bevorzugt erfolgt das Senden der Daten in anonymisierter Form, soweit es vorgesehen ist, diese Daten an Dritte weiter zu geben. Zusätzlich kann der Benutzer vorzugsweise jederzeit bestimmen, welche Daten gesendet werden sollen, und welche nicht.

Das in den Figuren 1 und 2 beschriebene Verfahren ermöglicht mit Vorteil den Vergleich von Reinigungshilfsmitteln bezüglich ihrer Eignung für eine vorgesehene Reinigungstätigkeit anhand von verschiedenen Attributen. Die Attribute setzen sich hierbei aus den Herstellerangaben, aus den individuellen Bewertungen der Konsumenten und neutralen Instanzen wie beispielsweise Testinstituten zusammen.

## Patentansprüche

1. Verfahren zur Bearbeitung von Reinigungstätigkeiten mit zur Verfügung stehenden Reinigungshilfsmitteln umfassend folgende Verfahrensschritte:
- Festlegen der durchzuführenden Reinigungstätigkeiten durch den Benutzer an einem tragbaren Zusatzgerät,
- Bestimmen und Festlegen zumindest eines zur Verfügung stehenden Reinigungshilfsmittels durch den Benutzer mit dem tragbaren Zusatzgerät,
- Verknüpfen des zur Verfügung stehenden Reinigungshilfsmittels mit den durchzuführenden Reinigungstätigkeiten,
- Darstellen von Vorschlägen an dem tragbaren Zusatzgerät bezüglich des zur Verfügung stehenden Reinigungshilfsmittels zum Erledigen zumindest einer der durchzuführenden Reinigungstätigkeiten unter Einbeziehen von Produktinformationen des zur Verfügung stehenden Reinigungshilfsmittels, der Gebrauchstauglichkeit des zur Verfügung stehenden Reinigungshilfsmittels und/oder während der Reinigung anfallende Prozessdaten, **dadurch gekennzeichnet, dass** das Bestimmen des zur Verfügung stehenden Reinigungshilfsmittels durch Scannen eines Produktbarcodes, durch Eingeben der Produktnummer oder durch Auswahl aus einem Menü erfolgt.

2. Verfahren nach einem der vorhergehenden Ansprüche, wobei das Verknüpfen des zur Verfügung stehenden Reinigungshilfsmittels mit den durchzuführenden Reinigungstätigkeiten mittels einer Lookup Tabelle erfolgt.

3. Verfahren nach einem der vorhergehenden Ansprüche, wobei beim Darstellen von Vorschlägen länderspezifische Besonderheiten einbezogen werden.

4. Verfahren nach einem der vorhergehenden Ansprüche, wobei beim Darstellen von Vorschlägen Nachhaltigkeit und/oder Umweltfreundlichkeit des zur Verfügung stehenden Reinigungshilfsmittels einbezogen werden, indem insbesondere Informationen Dritter einbezogen werden.

5. Verfahren nach einem der vorhergehenden Ansprüche, wobei beim Darstellen von Vorschlägen benutzerabhängige Informationen einbezogen werden.

6. Verfahren nach einem der vorhergehenden Ansprüche, wobei der Benutzer nach Erledigen der zumindest einen durchzuführenden Reinigungstätigkeit für das zur Verfügung stehende Reinigungshilfsmittel eine Bewertung an dem tragbaren Zusatzgerät abgibt.

7. Verfahren nach einem der vorhergehenden Ansprüche, umfassend den folgenden, weiteren Verfahrensschritt:
- Darstellen von Vorschlägen von weiteren, nicht im Haushalt des Benutzers vorhandenen Reinigungshilfsmitteln zum verbesserten Durchführen der durchzuführenden Reinigungstätigkeiten.

8. Verfahren nach einem der vorhergehenden Ansprüche, umfassend den folgenden, weiteren Verfahrensschritt:
- zum Einbeziehen von Produktinformationen des zur Verfügung stehenden Reinigungshilfsmittels relevante Werte von dem Reinigungshilfsmittel an das tragbare Zusatzgerät übermittelt werden.

9. Reinigungskonfigurator, der für ein Verfahren nach einem der vorhergehenden Ansprüche vorgesehen ist, bei dem nach Festlegen der durchzuführenden Reinigungstätigkeiten durch den Benutzer an einem tragbaren Zusatzgerät, nach Bestimmen und Festlegen zumindest eines zur Verfügung stehenden Reinigungshilfsmittels durch den Benutzer mit dem tragbaren Zusatzgerät und nach Verknüpfen des zur Verfügung stehenden Reinigungshilfsmittels mit den durchzuführenden Reinigungstätigkeiten Vorschläge bezüglich des zur Verfügung stehenden Reinigungshilfsmittels zum Erledigen zumindest einer der durchzuführenden Reinigungstätigkeiten dargestellt sind, wobei hierbei Produktinformationen des zur Verfügung stehenden Reinigungshilfsmittels, der Gebrauchstauglichkeit des zur Verfügung stehenden Reinigungshilfsmittels und/oder während der Reinigung anfallende Prozessdaten einbezogen sind, **dadurch gekennzeichnet, dass** das Bestimmen des zur Verfügung stehenden Reinigungshilfsmittels durch Scannen eines Produktbarcodes, durch Eingeben der Produktnummer oder durch Auswahl aus einem Menü erfolgt.

## Claims

1. Method for processing cleaning activities with available cleaning aids, comprising the following method steps:
- specification of the cleaning activities to be performed, by the user on a portable additional device,
- determination and specification of at least one available cleaning aid, by the user with the portable additional device,
- linking of the available cleaning aid with the cleaning activities to be performed,
- displaying of suggestions on the portable additional device with regard to the available cleaning aid for the completion of at least one of the cleaning activities to be performed, factoring in product information on the available cleaning aid, the suitability for use of the available cleaning aid and/or process data arising during the cleaning, **characterised in that** the determination of the available cleaning aid takes place by scanning a product barcode, by entering the product number or by selecting from a menu.

2. Method according to one of the preceding claims, wherein the linking of the available cleaning aid with the cleaning activities to be performed takes place by means of a lookup table.

3. Method according to one of the preceding claims, wherein country-specific special characteristics are factored in when displaying suggestions.

4. Method according to one of the preceding claims, wherein sustainability and/or eco-friendliness of the available cleaning aid are factored in when displaying suggestions, by information from third parties being factored in in particular.

5. Method according to one of the preceding claims, wherein user-dependent information is factored in when displaying suggestions.

6. Method according to one of the preceding claims, wherein, after completing the at least one cleaning activity to be performed, the user submits a review for the available cleaning aid on the portable additional device.

7. Method according to one of the preceding claims, comprising the following, further method step:
- displaying of suggestions of further cleaning aids that are not available in the household of the user for improved performance of the cleaning activities to be performed.

8. Method according to one of the preceding claims, comprising the following, further method step:
- in order to factor in product information of the available cleaning aid, relevant values of the cleaning aid are transmitted to the portable additional device.

9. Cleaning configurator, which is provided for a method according to one of the preceding claims, in which, after the specification of the cleaning activities to be performed by the user on a portable additional device, after determination and specification of at least one available cleaning aid by the user with the portable additional device and after linking of the available cleaning aid with the cleaning activities to be performed, suggestions are displayed with regard to the available cleaning aid for the completion of at least one of the cleaning activities to be performed, wherein product information on the available cleaning aid, the suitability for use of the available cleaning aid and/or process data arising during the cleaning are factored in here, **characterised in that** the determination of the available cleaning aid takes place by scanning a product barcode, by entering the product number or by selecting from a menu.

## Revendications

1. Procédé pour le traitement d'activités de nettoyage avec des auxiliaires de nettoyage disponibles, comprenant les étapes de procédé suivantes :
- définition par l'utilisateur sur un appareil supplémentaire portable des activités de nettoyage à réaliser,
- détermination et définition par l'utilisateur avec l'appareil supplémentaire portable d'au moins un auxiliaire de nettoyage disponible,
- association de l'auxiliaire de nettoyage disponible aux activités de nettoyage à réaliser,
- présentation sur l'appareil supplémentaire portable de propositions concernant l'auxiliaire de nettoyage disponible pour l'exécution d'au moins une des activités de nettoyage à réaliser en tenant compte d'informations de produit de l'auxiliaire de nettoyage disponible, de l'aptitude à l'emploi de l'auxiliaire de nettoyage disponible et/ou de données de processus survenant durant le nettoyage, **caractérisé en ce que** la détermination de l'auxiliaire de nettoyage disponible s'effectue en scannant un code-barres de produit, en saisissant le numéro de produit ou en sélectionnant à partir d'un menu.

2. Procédé selon l'une des revendications précédentes, dans lequel l'association de l'auxiliaire de nettoyage disponible aux activités de nettoyage à réaliser s'opère au moyen d'un tableau de consultation.

3. Procédé selon l'une des revendications précédentes, dans lequel des particularités spécifiques à un pays sont prises en compte lors de la présentation de propositions.

4. Procédé selon l'une des revendications précédentes, dans lequel, lors de la présentation de propositions, la durabilité et/ou le caractère écologique de l'auxiliaire de nettoyage disponible sont pris en compte, en particulier en intégrant des informations de tiers.

5. Procédé selon l'une des revendications précédentes, dans lequel des informations dépendantes de l'utilisateur sont prises en compte lors de la présentation de propositions.

6. Procédé selon l'une des revendications précédentes, dans lequel après l'exécution de l'au moins une activité de nettoyage à réaliser, l'utilisateur fournit à l'appareil supplémentaire portable une évaluation pour l'auxiliaire de nettoyage disponible.

7. Procédé selon l'une des revendications précédentes, comprenant l'étape de procédé supplémentaire suivante :
- présentation de propositions de moyens auxiliaires de nettoyage supplémentaires, indisponibles dans le ménage de l'utilisateur, pour améliorer la réalisation des activités de nettoyage à réaliser.

8. Procédé selon l'une des revendications précédentes, comprenant l'étape de procédé supplémentaire suivante :
- des valeurs pertinentes sont transmises de l'auxiliaire de nettoyage à l'appareil supplémentaire portable afin d'inclure des informations de produit de l'auxiliaire de nettoyage disponible.

9. Configurateur de nettoyage, prévu pour un procédé selon l'une des revendications précédentes, dans lequel, après la définition par l'utilisateur sur un appareil supplémentaire portable des activités de nettoyage à réaliser, après la détermination et la définition d'au moins un moyen auxiliaire de nettoyage disponible par l'utilisateur avec l'appareil supplémentaire portable et après l'association du moyen auxiliaire de nettoyage disponible aux activités de nettoyage à réaliser, des propositions concernant le moyen auxiliaire de nettoyage disponible pour l'exécution d'au moins l'une des activités de nettoyage à réaliser sont présentées, dans lequel des informations de produit de l'auxiliaire de nettoyage disponible, de l'aptitude à l'emploi de l'auxiliaire de nettoyage disponible et/ou des données de processus survenant pendant le nettoyage sont incluses, **caractérisé en ce que** la détermination de l'auxiliaire de nettoyage disponible s'effectue en scannant un code-barres de produit, en saisissant le numéro de produit ou en sélectionnant à partir d'un menu.
